# EUROPEAN PATENT SPECIFICATION

(11) **EP 2 782 202 B1**
(45) Date of publication and mention of the grant of the patent: **30.08.2017**
(21) Application number: 13794011.0
(22) Date of filing: 23.05.2013
(51) Int. Cl.: H02H 7/20, G06F 1/30, G06F 1/26

(54) **PROTECTION METHOD OF ELECTRONIC DEVICE AND ELECTRONIC DEVICE**
VERFAHREN ZUM SCHUTZ EINER ELEKTRONISCHEN VORRICHTUNG UND ELEKTRONISCHE VORRICHTUNG
PROCÉDÉ DE PROTECTION D'UN DISPOSITIF ÉLECTRONIQUE, ET DISPOSITIF ÉLECTRONIQUE

(30) Priority: 25.05.2012 CN 201210165696
(43) Date of publication of application: 24.09.2014
(73) Proprietor: Huawei Device Co., Ltd., Shenzhen, Guangdong 518129 (CN)
(72) Inventor: XU, Shunhai, Shenzhen Guangdong 518129 (CN)
(74) Representative: Thun, Clemens
(86) International application number: PCT/CN2013/076156
(87) International publication number: WO 2013/174296

(56) References cited:
- EP-A1- 2 372 859
- EP-A2- 1 978 625
- EP-A2- 2 400 368
- CN-A- 101 097 476
- CN-A- 101 430 594
- CN-A- 101 446 912
- US-A1- 2001 030 469
- US-A1- 2002 052 706
- US-A1- 2011 109 809
- US-A1- 2011 310 522

## Description

### TECHNICAL FIELD

The present invention relates to the field of electricity, and in particular, to a method for protecting an electronic device and an electronic device.

### BACKGROUND

With the development of electronic technologies, a higher requirement is imposed for protecting an electronic device in a case where an exception event occurs. At present, a method for an electronic device to handle a device exception is as follows:
An electronic device starts a shutdown process when detecting that an exception event occurs, and instructs a power management (Power Management, PM) chip to power off.

EP 2 400 368 A2 refers to a power cut-off based on current. The method includes measuring a current in the portable electronic device and determining, as a function of the current, whether the portable electronic device may overheat. When the portable electronic device may overheat, at least one component in the portable electronic device can be turned off.

EP 2 372 859 A1 refers to a thermal protection method and system of an Integrated Circuit (IC), which are applicable to a wireless terminal equipment. The method includes: measuring a temperature value of a protection point; comparing the measured temperature value with a thermal protection temperature threshold; and starting a protection measure when the measured temperature value reaches or exceeds the thermal protection temperature threshold and a duration of reaching or exceeding the thermal protection temperature threshold exceeds a preset time.

US 2001/0030469 A1 refers to a backup power-source module that controls a backup power source for supplying power from a battery charged by an AC input to an electronic device when the AC input is cut off. The backup power-source module includes a selection which generates a selection signal for selecting power supplied by a battery when the electronic device is kept in an electrified state until the electronic device is shifted to a power cutoff state and there is no AC input. I.E., the selection signal causes the power supplied by the battery to be selected only when the electronic device is kept in a power cutoff state and there is no AC input

EP 1 978 625 A2 refers to a controller including a fault detector and a control. The fault detector is to be coupled to a feedback circuit of a power converter to detect a fault condition in the power converter in response to an input voltage of the power converter. The control is coupled to the fault detector and is to be coupled to control the switching of a power switch to regulate an output of the power converter. The control is coupled to inhibit the switching of the power switch in response to the fault detector detecting the fault condition during the switching of the power switch.

US 2011/0310522 A1 discloses a temperature protection circuit including a detection circuit, a comparison circuit, a switching circuit, and a control circuit. When the temperature of an electronic device is below a preset temperature, a detecting voltage signal exceeds a reference temperature signal, and the comparison circuit outputs a control signal to open the switching circuit. The control circuit directs a power circuit to provide voltage to an operating circuit. When a temperature of the electronic device exceeds the preset temperature, the detecting voltage signal is below the reference temperature signal, and the comparison circuit outputs a control signal to close the switching circuit. The control circuit directs the power circuit to stop supplying voltages to the operating circuit.

US 2002/0052706 A1 refers to a method for controlling power of a computer, a power control apparatus, and the computer which can prevent a user from feeling uneasy unnecessarily and inhibit a power-on problem from arising again. When the power switch is depressed, the power-on self test (POST) starts and if there is no error detected by that test in connection with the initialization of the IC, the operating system OS is loaded to make the computer operative. If there is any error detected, a determination is made whether that error occurs as frequently as or more frequently than a predetermined number of times. If that error occurs as frequently as or more frequently than the predetermined number of times, an error indication is displayed and then the process ends.; If that error occurs less frequently than the predetermined number of times, the error history is stored and then a setup for stabling the hardware operation is selected. Then, a restart signal to restart the computer is sent and the process ends.

US 2011/0109809A1 refers to an electronic device including a power managing unit configured to supply power to the electronic device. A receiver adapted to receive program signals, wherein the program signals comprises at least one composite video signal. A processor configured for obtaining the composite video signal from the program signals according to a selected program/channel, and processing the composite video signal to directly output the composite video signal. An automatic turnoff unit electrically connected to the processor and the power managing unit, configured to detect whether the composite video signal has been interrupted for a predetermined time interval and control the power managing unit to power off the electronic device if the composite video signal has been interrupted for the predetermined time interval. A related automatic turnoff method for automatically turning off an electronic device is also disclosed.

However, in the foregoing technology, after the electronic device shuts down because of the exception event and the PM chip powers off, a power supply (for example, an external power supply or a storage battery) of the electronic device remains in a power-on state. In this way, after the PM chip powers off, the power supply still continues to supply power to the PM chip, the PM chip is reset, the PM chip supplies power to another chip of the electronic device, and the electronic device restarts. In this way, after an exception occurs on the electronic device, effective shutdown cannot be implemented, and an abnormal chip is continuously electrified. As a result, the electronic device has a potential security risk.

### SUMMARY

Embodiments of the present invention provide a method for protecting an electronic device and an electronic device, which can implement effective shutdown after an exception occurs on an electronic device, thereby eliminating a potential security risk that an abnormal chip of the electronic device is continuously electrified after the electronic device shuts down because of an exception event.

In order to solve the foregoing technical problem, an embodiment of the present invention provides a method for protecting an electronic device, where the electronic device includes a control switch for controlling output of a power supply, and the method includes:
detecting whether an exception event occurs, and if it is detected that an exception event occurs, generating a control signal for controlling the control switch; and
controlling, based on the control signal, the control switch to disconnect an output channel of the power supply, wherein the exception event is a unauthorized external signal access.

Correspondingly, an embodiment of the present invention further provides an electronic device, including: a detecting unit, a generating unit, and a controlling unit, where the controlling unit includes a control switch for controlling output of a power supply;
the detecting unit is configured to detect whether an exception event occurs;
the generating unit is configured to: when the detecting unit detects that an exception event occurs, generate a control signal for controlling the control switch; and
the controlling unit is configured to control, based on the control signal generated by the generating unit, the control switch to disconnect an output channel of the power supply, wherein the exception event is a unauthorized external signal access.

In the embodiments of the present invention, an electronic device detects whether an exception event occurs, and if it is detected that an exception event occurs, generates a control signal, where the control signal instructs a control switch to disconnect an output channel of a power supply. In this way, effective shutdown can be implemented after an exception occurs on the electronic device, thereby eliminating a potential security risk that an abnormal chip of the electronic device is continuously electrified after the electronic device shuts down because of an exception event.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of a method for protecting an electronic device according to an embodiment of the present invention;
FIG. 2 is a schematic flowchart of a second embodiment of a method for protecting an electronic device according to an embodiment of the present invention;
FIG. 3 is a schematic flowchart of a third embodiment of a method for protecting an electronic device according to an embodiment of the present invention;
FIG. 4 is a schematic structural diagram of a first embodiment of an electronic device according to an embodiment of the present invention;
FIG. 5 is a schematic structural diagram of a second embodiment of an electronic device according to an embodiment of the present invention;
FIG. 6 is a schematic structural diagram of a third embodiment of an electronic device according to an embodiment of the present invention;
FIG. 7 is a schematic structural diagram of another implementation manner of the third embodiment of the electronic device according to an embodiment of the present invention; and
FIG. 8 is a schematic structural diagram of another implementation manner of the third embodiment of the electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

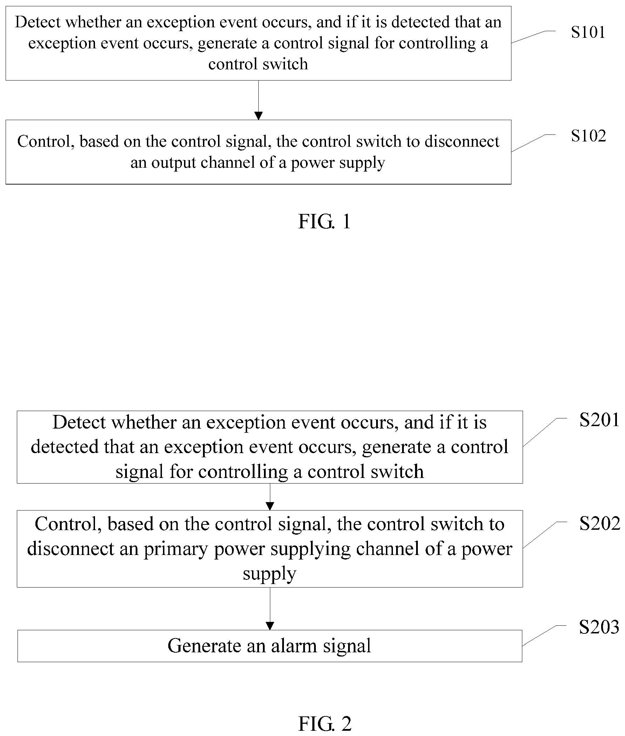

FIG. 1 is a schematic flowchart of a first embodiment of a method for protecting an electronic device according to an embodiment of the present invention. In the embodiment of the present invention, the electronic device includes a control switch for controlling output of a power supply. As shown in FIG. 1, the method includes:
S101: Detect whether an exception event occurs, and if it is detected that an exception event occurs, generate a control signal for controlling the control switch.

It should be noted that an exception event in the present invention is an unauthorized external signal input, and further exception events not forming part of the invention are chip exception or an exception of the power supply, where the chip exception may be an exception event such as an internal short-circuit of a chip, a temperature exception of a chip, or an abnormal power failure of a chip. Certainly, in the embodiment of the present invention, an exception event includes but is not limited to the exception events listed above. A step for the electronic device to detect whether an exception event occurs may be specifically: detecting, by a chip inside the electronic device, whether an exception event occurs, or may also be: detecting, by a watchdog circuit or baseband chip inside the electronic device, or by the power supply, whether an exception event occurs, where the detecting, by the power supply, whether an exception event occurs includes: detecting whether an exception event occurs on the power supply or detecting whether there is an unauthorized external signal input.

S102: Control, based on the control signal, the control switch to disconnect an output channel of the power supply.

It should be noted that after the output channel of the power supply is disconnected, the electronic device automatically shuts down; moreover, the power supply also cannot supply power to a PM chip or another chip. However, when the electronic device has multiple power supplies, for example, includes a primary power supply that can continue to supply power to a chip inside the electronic device after the electronic device shuts down and a backup power supply that cannot continue to supply power to the chip inside the electronic device after the electronic device shuts down, in the embodiment, the control switch included in the electronic device is a control switch for controlling output of the primary power supply, and step S102 may be specifically: controlling, by the electronic device based on the control signal, the control switch to disconnect an output channel of the primary power supply. Because the electronic device has the primary power supply and the backup power supply, after the output channel of the primary power supply is disconnected, the electronic device may continue to operate with the power supplied by the backup power supply. In this way, after step S102, the method may further include:
starting, by the electronic device, a shutdown process.

The shutdown process is started after the output channel of the primary power supply is disconnected. In this way, after an exception event occurs on the electronic device, effective shutdown can be implemented.

If the electronic device includes multiple primary power supplies, the electronic device includes multiple control switches, where each control switch controls output of one primary power supply. In this way, step S102 may be specifically: controlling, by the electronic device based on the control signal, the multiple control switches to disconnect an output channel of the primary power supplies.

In the embodiment, whether an exception event occurs is detected; and if it is detected that an exception event occurs, a control signal is generated. Based on the control signal, the control switch is controlled to disconnect an output channel of a power supply. In this way, effective shutdown can be implemented after an exception occurs on an electronic device, thereby eliminating a potential security risk that an abnormal chip of the electronic device is continuously electrified after the electronic device shuts down because of an exception event.

FIG. 2 is a schematic flowchart of a second embodiment of a method for protecting an electronic device according to an embodiment of the present invention. In the embodiment, a power supply of the electronic device includes two power supplying channels, that is, a primary power supplying channel and a secondary power supplying channel, where the primary power supplying channel provides a power supply required for the electronic device to operate, and the secondary power supplying channel provides a power supply required by a secondary circuit. The electronic device further includes a control switch for controlling the primary power supplying channel of the power supply. As shown in FIG. 2, the method includes:
S201: Detect whether an exception event occurs, and if it is detected that an exception event occurs, generate a control signal for controlling the control switch. Specifically, reference may be made to the description of the foregoing step S101.
S202: Control, based on the control signal, the control switch to disconnect the primary power supplying channel of the power supply.

After the primary power supplying channel of the power supply is disconnected, the electronic device automatically shuts down; moreover, the power supply also cannot supply power to a PM chip or another chip. Specifically, reference may be made to the description of the foregoing step S102.

S203: Generate an alarm signal.

An alarm signal may be specifically a prompt signal such as a sound signal or an optical signal. In this way, a user can handle an exception event that occurs in time after receiving the alarm signal. Certainly, within a period from the generating an alarm signal to the handling, by a user, an exception event that occurs, the control switch retains that the output channel of the power supply is disconnected, which prevents a chip inside the electronic device from being powered on again within the period, thereby eliminating a potential security risk.

It should be noted that the generating an alarm signal is implemented by the secondary circuit, where the secondary circuit is powered by the secondary power supplying channel of the power supply. That is, after the primary power supplying channel of the power supply is disconnected in step S202, the secondary power supplying channel of the power supply continues to supply power to the secondary circuit, and the secondary circuit generates an alarm signal.

In the embodiment, on the basis of the foregoing embodiment, a step of generating an alarm signal is added. In this way, when an exception event occurs on an electronic device and after a primary power supplying channel of a power supply is disconnected, an alarm signal may be generated, so as to instruct a user to handle the exception event in time.

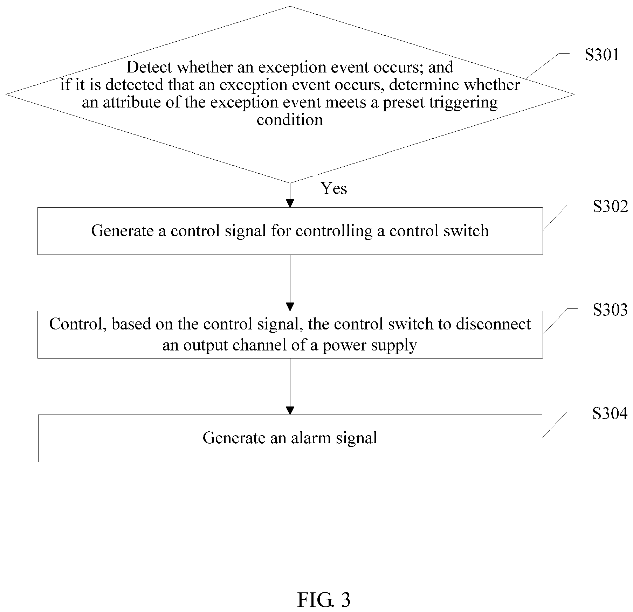

FIG. 3 is a schematic flowchart of a third embodiment of a method for protecting an electronic device according to an embodiment of the present invention. In the embodiment of the present invention, the electronic device includes a control switch for controlling output of a power supply. As shown in FIG. 3, the method includes:
S301: Detect whether an exception event occurs. If it is detected that an exception event occurs, determine whether an attribute of the exception event meets a preset triggering condition. If a determination result is yes, perform step S302; and if a determination result is no, continue to detect whether an exception event occurs. If it is detected that an exception event occurs, determine whether an attribute of the exception event meets the preset triggering condition.

It should be noted that in step S301, the determining, when the electronic device detects that an exception event occurs, whether an attribute of the exception event meets a preset triggering condition may be specifically: when the electronic device detects that an exception event occurs, detecting whether the number of times of occurrence of the exception event is larger than a preset threshold of the number of times of occurrence. The electronic device generates a control signal for controlling the control switch only when the number of times of occurrence of the exception event is larger than the preset threshold of the number of times of occurrence. Moreover, for a different electronic device, a different threshold of the number of times of occurrence of an exception event may be set according to performance of a chip inside the electronic device. That is, a different electronic device has a different triggering condition for generating a control signal for controlling the control switch. For example, a larger threshold of the number of times of occurrence of an exception event is set for a chip inside an electronic device that has higher performance. In this way, effective shutdown can be implemented after an exception occurs on the electronic device, thereby eliminating a potential security risk that an abnormal chip of the electronic device is continuously electrified after the electronic device shuts down because of an exception event, and operating efficiency of the electronic device can be further improved.

It should be noted that in an example not forming part of the invention the method may further include:
setting, by the electronic device, a different triggering condition for a different exception event in advance. The exception event may include one or more of a chip exception, unauthorized external signal access, or an exception of the power supply. In this way, a different triggering condition can be set for the exception event in advance. Specifically, a different triggering condition may be set according to severity of an exception event or harm on an electronic device. For example, an electronic device sets, in advance, that a triggering condition of a chip exception event is that a threshold of the number of times of occurrence is 3 times, and sets, in advance, that a triggering condition of unauthorized external signal access is that a threshold of the number of times of occurrence is 1 time, and the like, which are not fully exemplified herein. In this way, operating efficiency of the electronic device can be significantly improved.

S302: The electronic device generates a control signal for controlling the control switch.

S303: The electronic device controls, based on the control signal, the control switch to disconnect an output channel of the power supply. Specifically, reference may be made to the description of the foregoing step S102.

S304: The electronic device generates an alarm signal. Specifically, reference may be made to the description of the foregoing step S203.

In the embodiment, on the basis of the foregoing embodiment, a step of determining whether an attribute of an exception event meets a preset triggering condition is added. A control signal is generated, an output channel of a power supply is disconnected, and an alarm signal is generated only when the exception event meets the preset triggering condition. In this way, effective shutdown can be implemented after an exception occurs on the electronic device, thereby eliminating a potential security risk that an abnormal chip of the electronic device is continuously electrified after the electronic device shuts down because of an exception event, and operating efficiency of the electronic device is further improved.

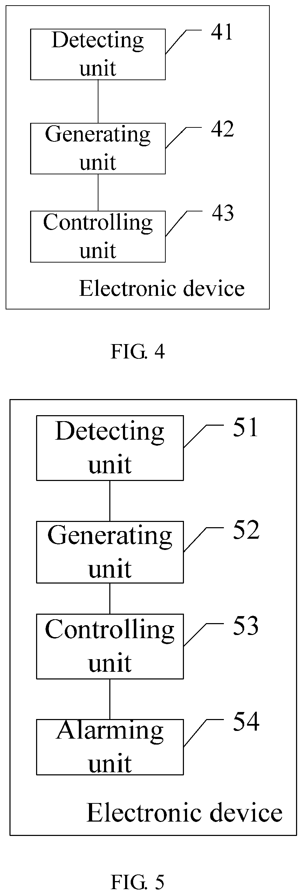

FIG. 4 is a schematic structural diagram of an electronic device according to an embodiment of the present invention. As shown in FIG. 4, the electronic device includes a detecting unit 41, a generating unit 42, and a controlling unit 43, where the controlling unit 43 includes a control switch for controlling output of a power supply.

The detecting unit 41 is configured to detect whether an exception event occurs.

It should be noted that an exception event is an unauthorized external signal access, or in an example not forming part of the invention the exception event can be an exception of the power supply, where the chip exception may be an exception event such as an internal short-circuit of a chip, a temperature exception of a chip, or an abnormal power failure of a chip. Certainly, in the embodiment of the present invention, an exception event includes but is not limited to the exception events listed above.

The generating unit 42 is configured to: when the detecting unit 41 detects that an exception event occurs, generate a control signal for controlling the control switch.

It should be noted that in a specific implementation manner, the control switch may be specifically a field-effect transistor, where the field-effect transistor is connected between the power supply and a PM chip. After the electronic device is powered on, the generating unit 42 generates one control signal for controlling connection of the field-effect transistor, so that the power supply supplies power to the PM chip, and the electronic device enters an operating state. When the detecting unit 41 detects an exception event, the generating unit 42 generates one control signal for controlling disconnection of the field-effect transistor, thereby disconnecting a channel for the power supply to supply power to the PM chip and stopping supplying power to the PM chip, and the electronic device shuts down.

The controlling unit 43 is configured to control, based on the control signal generated by the generating unit 42, the control switch to disconnect an output channel of the power supply.

It should be noted that after the controlling unit 43 controls the control switch to disconnect the output channel of the power supply, the electronic device automatically shuts down; moreover, the power supply also cannot supply power to the PM chip or another chip. However, when the electronic device has multiple power supplies, for example, includes a primary power supply that can continue to supply power to a chip inside the electronic device after the electronic device shuts down and a backup power supply that cannot continue to supply power to a chip inside the electronic device after the electronic device shuts down, in the embodiment, the control switch in the controlling unit 43 is a control switch for controlling output of the primary power supply, and the controlling unit 43 is further configured to control, based on the control signal generated by the generating unit, the control switch to disconnect an output channel of the primary power supply.

Because the electronic device has the primary power supply and the backup power supply, after the output channel of the primary power supply is disconnected, the electronic device may continue to operate with the power supplied by the backup power supply. In this way, the electronic device may further include:
a shutdown unit, configured to start a shutdown process after the controlling unit 43 controls the control switch to disconnect the output channel of the power supply.

The shutdown process is started after the output channel of the primary power supply is disconnected. In this way, effective shutdown can be implemented after an exception event occurs on the electronic device. Certainly, because of a cause such as the amount of electricity stored in the backup power supply, after the electronic device starts the switch, the backup power supply cannot supply power to the PM chip or another chip.

In the embodiment, a detecting unit detects whether an exception event occurs; when the detecting unit detects that an exception event occurs, a generating unit generates a control signal; and a controlling unit controls, based on the control signal generated by the generating unit, a control switch to disconnect an output channel of a power supply. In this way, effective shutdown can be implemented after an exception occurs on the electronic device, thereby eliminating a potential security risk that an abnormal chip of the electronic device is continuously electrified after the electronic device shuts down because of an exception event.

FIG. 5 is a schematic structural diagram of a second embodiment of an electronic device according to an embodiment of the present invention. In the embodiment, a power supply of the electronic device includes two power supplying channels, that is, a primary power supplying channel and a secondary power supplying channel, where the primary power supplying channel provides a power supply required for the electronic device to operate, and the secondary power supplying channel provides a power supply required by an alarming unit. As shown in FIG. 5, the electronic device includes a detecting unit 51, a generating unit 52, a controlling unit 53, and an alarming unit 54, where the controlling unit 53 includes a control switch for controlling output of the power supply.

The detecting unit 51 is configured to detect whether an exception event occurs. Specifically, reference may be made to the description of the foregoing detecting unit 41.

The generating unit 52 is configured to: when the detecting unit 51 detects that an exception event occurs, generate a control signal for controlling the control switch. Specifically, reference may be made to the description of the foregoing generating unit 42.

The controlling unit 53 is configured to control, based on the control signal generated by the generating unit 52, the control switch to disconnect the primary power supplying channel of the power supply. Specifically, reference may be made to the description of the foregoing controlling unit 43.

The alarming unit 54 is configured to generate an alarm signal after the controlling unit 53 disconnects the output channel of the power supply.

An alarm signal may be specifically a prompt signal such as a sound signal or an optical signal. In this way, a user can handle an exception event that occurs in time after receiving the alarm signal. Certainly, within a period from the generating an alarm signal to the handling, by a user, an exception event that occurs, the control switch retains that the output channel of the power supply is disconnected, which prevents a chip inside the electronic device from being powered on again within the period, thereby eliminating a potential security risk.

It should be noted that the alarming unit 54 is powered by the secondary power supplying channel of the power supply. That is, after the controlling unit 53 disconnects the primary power supplying channel of the power supply, the secondary power supplying channel of the power supply continues to supply power to the alarming unit 54, and the alarming unit 54 generates an alarm signal.

In the embodiment, on the basis of the foregoing embodiment, an alarming unit is added. In this way, when an exception event occurs on an electronic device and after a primary power supplying channel of a power supply is disconnected, an alarm signal may be generated, so as to instruct a user to handle the exception event in time.

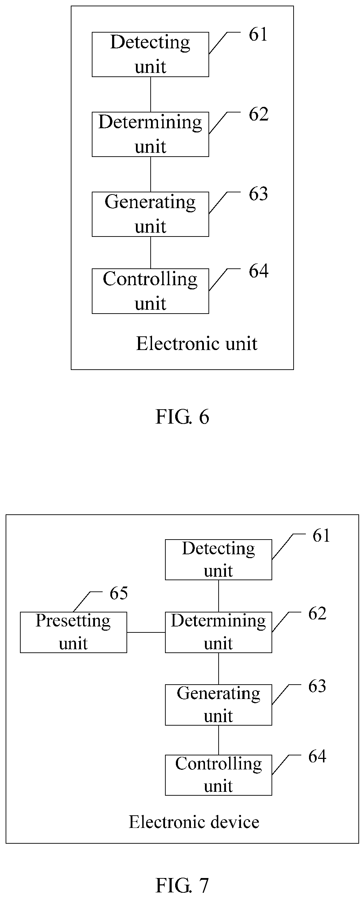

FIG. 6 is a schematic structural diagram of a third embodiment of an electronic device according to an embodiment of the present invention. As shown in FIG. 6, the electronic device includes a detecting unit 61, a determining unit 62, a generating unit 63, and a controlling unit 64, where the controlling unit 63 includes a control switch for controlling output of a power supply.

The detecting unit 61 is configured to detect whether an exception event occurs. Specifically, reference may be made to the description of the foregoing detecting unit 41.

The determining unit 62 is configured to: when the detecting unit 61 detects that an exception event occurs, determine whether an attribute of the exception event meets a preset triggering condition, and if a determination result is yes, instruct the generating unit 63 to generate a control signal for controlling the control switch. In this way, the generating unit 63 generates a control signal for controlling the control switch only when an exception event that occurs meets the preset triggering condition, so that the electronic device performs a protection action for the exception event that occurs, and operating efficiency of the electronic device can also be improved.

Specifically, the determining unit 62 is further configured to: when the detecting unit 61 detects that an exception event occurs, determine whether the number of times of occurrence of the exception event is larger than a preset threshold of the number of times of occurrence, and if a determination result is yes, instruct the generating unit 63 to generate a control signal for controlling the control switch.

The electronic device generates a control signal for controlling the control switch only when the number of times of occurrence of the exception event is larger than the preset threshold of the number of times of occurrence. In this way, effective shutdown can be implemented after an exception occurs on the electronic device, thereby eliminating a potential security risk that an abnormal chip of the electronic device is continuously electrified after the electronic device shuts down because of an exception event, and operating efficiency of the electronic device can be further improved.

The generating unit 63 is configured to: when the determining unit 62 determines that an attribute of the exception event meets the preset triggering condition, generate a control signal for controlling the control switch. Specifically, reference may be made to the description of the foregoing generating unit 42.

The controlling unit 64 is configured to control, based on the control signal generated by the generating unit 63, the control switch to disconnect a primary power supplying channel of the power supply. Specifically, reference may be made to the description of the foregoing controlling unit 43.

It should be noted that, as shown in FIG. 7, in another implementation manner, the electronic device may further include:
a presetting unit 65, configured to set a different triggering condition for a different exception event in advance; and
the determining unit 62 is further configured to: when the detecting unit 61 detects that an exception event occurs, determine whether an attribute of the exception event meets a triggering condition that is set by the presetting unit 65 for the exception event in advance, and if a determination result is yes, instruct the generating unit to generate a control signal for controlling the control switch.

Specifically, the presetting unit 65 may set a different triggering condition according to severity of an exception event or harm on an electronic device. For example, the presetting unit 65 sets, in advance, that a triggering condition of a chip exception event, being an example of an exception event not forming part of the invention, is that a threshold of the number of times of occurrence is 3 times, and sets, in advance, that a triggering condition of unauthorized external signal access is that a threshold of the number of times of occurrence is 1 time, and the like, which are not fully exemplified herein. In this way, operating efficiency of the electronic device can be significantly improved.

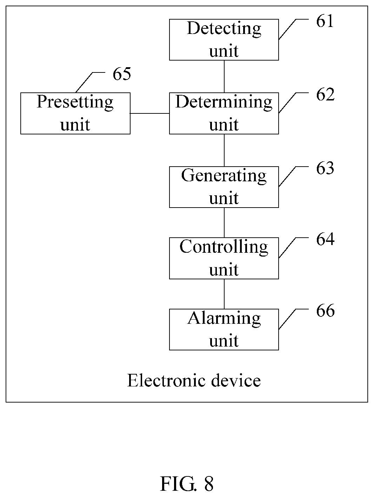

It should be noted that, as shown in FIG. 8, in another implementation manner, the electronic device may further include:
an alarming unit 66, configured to generate an alarm signal after the controlling unit 63 disconnects the output channel of the power supply. Specifically, reference may be made to the description of the foregoing controlling unit 54.

In the embodiment, on the basis of the foregoing embodiment, a determining unit is added. A control signal is generated, and an output channel of a power supply is disconnected only when an exception event meets a preset triggering condition. In this way, effective shutdown can be implemented after an exception occurs on an electronic device, thereby eliminating a potential security risk that an abnormal chip of the electronic device is continuously electrified after the electronic device shuts down because of an exception event, and operating efficiency of the electronic device can be further improved.

The foregoing description is merely exemplary embodiments of the present invention, but is not intended to limit the scope of the claims of the present invention. Therefore, equivalent changes made according to the claims of the present invention shall fall within the scope of the present invention.

## Claims

1. A method for protecting an electronic device, wherein the electronic device comprises a control switch for controlling output of a power supply, and the method comprises:
detecting whether an exception event occurs, and if it is detected that an exception event occurs, generating a control signal for controlling the control switch (S101, S201); and
controlling, based on the control signal, the control switch to disconnect an output channel of the power supply (S102, S202),
**characterized in that**
the exception event is a unauthorized external signal access.

2. The method according to claim 1, wherein the power supply is a multiple power supply comprising a primary power supply and a backup power supply, and the electronic device comprises the primary power supply that supplies power to a chip inside the electronic device independent from a shut down of the electronic device, and the backup power supply that cannot continue to supply power to the chip inside the electronic device after the electronic device shuts down, wherein the control switch is a control switch for controlling output of the primary power supply; and
the step of controlling, based on the control signal, the control switch to disconnect the output channel of the power supply is specifically:
controlling, based on the control signal, the control switch to disconnect an output channel of the primary power supply.

3. The method according to claim 2, wherein after the step of controlling, based on the control signal, the control switch to disconnect the output channel of the primary power supply, the method further comprises:
starting a shutdown process.

4. The method according to any one of claims 1 to 3, wherein after it is detected that the exception event occurs and before the generating the control signal for controlling the control switch, the method further comprises:
determining whether an attribute of the exception event meets a preset triggering condition (S301); and if a determination result is yes, triggering the step of generating, by the electronic device, a control signal for controlling the control switch (S302).

5. The method according to claim 4, wherein the step of determining whether the attribute of the exception event meets the preset triggering condition is specifically:
determining whether the number of times of occurrence of the exception event is larger than a preset threshold of the number of times of occurrence.

6. The method according to any one of claims 1 to 3, wherein after the controlling, based on the control signal, the control switch to disconnect the output channel of the power supply, the method further comprises:
generating an alarm signal (S203, S304).

7. An electronic device, comprising: a detecting unit (41, 51, 61), a generating unit (42, 52, 63), and a controlling unit (43, 53, 64), wherein the controlling unit (43, 53, 64) comprises a control switch for controlling output of a power supply;
the detecting unit (41, 51, 61) is configured to detect whether an exception event occurs;
the generating unit (42, 52, 63) is configured to: when the detecting unit (41, 51, 61) detects that an exception event occurs, generate a control signal for controlling the control switch; and
the controlling unit (43, 53, 64) is configured to control, based on the control signal generated by the generating unit (42, 52, 63), the control switch to disconnect an output channel of the power supply,
**characterized in that**
the exception event is a unauthorized external signal access.

8. The electronic device according to claim 7, wherein the power supply is a multiple power supply comprising a primary power supply and a backup power supply, and the electronic device comprises the primary power supply that supplies power to a chip inside the electronic device independent from a shut down , and the backup power supply that cannot continue to supply power to the chip inside the electronic device after the electronic device shuts down, wherein the control switch is a control switch for controlling output of the primary power supply, and the controlling unit (43, 53, 64) is further configured to control, based on the control signal generated by the generating unit (42, 52, 63), the control switch to disconnect an output channel of the primary power supply.

9. The electronic device according to claim 8, wherein the electronic device further comprises:
a shutdown unit, configured to start a shutdown process after the controlling unit controls the control switch to disconnect the output channel of the power supply.

10. The electronic device according to any one of claims 7 to 9, wherein the electronic device further comprises:
a determining unit (62), configured to: when the detecting unit (41,51,61) detects that an exception event occurs, determine whether an attribute of the exception event meets a preset triggering condition, and if a determination result is yes, instruct the generating unit to generate a control signal for controlling the control switch.

11. The electronic device according to claim 10, wherein the determining unit is further configured to: when the detecting unit (41, 51, 61) detects that the exception event occurs, determine whether the number of times of occurrence of the exception event is larger than a preset threshold of the number of times of occurrence, and if a determination result is yes, instruct the generating unit (42, 52, 63) to generate a control signal for controlling the control switch.

12. The electronic device according to claims 7 to 9, wherein the electronic device further comprises:
an alarming unit (54, 66), configured to generate an alarm signal after the controlling unit disconnects the output channel of the power supply.

## Patentansprüche

1. Verfahren zum Schützen einer elektronischen Vorrichtung, wobei die elektronische Vorrichtung einen Steuerschalter zur Steuerung der Ausgabe einer Stromversorgung umfasst und das Verfahren umfasst:
Detektieren, ob ein Ausnahmeereignis auftritt, und falls detektiert wird, dass ein Ausnahmeereignis stattfindet, Erzeugen eines Steuersignals zum Steuern des Steuerschalters (S101, S201); und
Steuern des Steuerschalters basierend auf dem Steuersignal, um die Verbindung zu einem Ausgabekanal der Stromversorgung (S102, S202) zu trennen,
**dadurch gekennzeichnet, dass**
das Ausnahmeereignis ein nicht autorisierter externer Signalzugriff ist.

2. Verfahren nach Anspruch 1, wobei die Stromversorgung eine Mehrfachstromversorgung ist, die eine primäre Stromversorgung und eine Backup-Stromversorgung umfasst, und die elektronische Vorrichtung die primäre Stromversorgung, die einen Chip im Inneren der elektronischen Vorrichtung unabhängig von einem Herunterfahren der elektronischen Vorrichtung mit Strom versorgt, und die Backup-Stromversorgung umfasst, die den Chip im Inneren der elektronischen Vorrichtung nicht weiter mit Strom versorgen kann, nachdem die elektronische Vorrichtung herunterfährt, wobei der Steuerschalter ein Steuerschalter zum Steuern der Ausgabe der primären Stromversorgung ist; und
der Schritt zum Steuern des Steuerschalters basierend auf dem Steuersignal, um die Verbindung zu einem Ausgabekanal der Stromversorgung zu trennen, speziell Folgendes ist:
Steuern des Steuerschalters basierend auf dem Steuersignal, um die Verbindung zu einem Ausgabekanal der primären Stromversorgung zu trennen.

3. Verfahren nach Anspruch 2, wobei das Verfahren nach dem Schritt des Steuerns des Steuerschalters basierend auf dem Steuersignal, um die Verbindung zu dem Ausgabekanal der primären Stromversorgung zu trennen, ferner umfasst:
Starten eines Herunterfahrprozesses.

4. Verfahren nach einem der Ansprüche 1 bis 3, wobei das Verfahren, nachdem detektiert wurde, dass das Ausnahmeereignis stattgefunden hat, und vor dem Erzeugen des Steuersignals zum Steuern des Steuerschalters, ferner umfasst:
Bestimmen, ob ein Attribut des Ausnahmeereignisses eine vorgegebene Auslösebedingung (S301) erfüllt; und falls das Ergebnis einer Bestimmung ja ist, Auslösen des Schritts des Erzeugens eines Steuersignals zum Steuern des Steuerschalters (S302) durch die elektronische Vorrichtung.

5. Verfahren nach Anspruch 4, wobei der Schritt des Bestimmens, ob das Attribut des Ausnahmeereignisses die vorgegebene Auslösebedingung erfüllt, speziell Folgendes ist:
Bestimmen, ob die Anzahl der Male, die das Ausnahmeereignis aufgetreten ist, größer als ein vorgegebener Schwellenwert der Anzahl der Male des Auftretens ist.

6. Verfahren nach einem der Ansprüche 1 bis 3, wobei das Verfahren nach dem Steuern des Steuerschalters basierend auf dem Steuersignal, um die Verbindung zu dem Ausgabekanal der Stromversorgung zu trennen, ferner umfasst:
Erzeugen eines Alarmsignals (S203, S304).

7. Elektronische Vorrichtung, umfassend: eine Detektierungseinheit (41, 51, 61), eine Erzeugungseinheit (42, 52, 63) und eine Steuereinheit (43, 53, 64), wobei die Steuereinheit (43, 53, 64) einen Steuerschalter zum Steuern der Ausgabe einer Stromversorgung umfasst;
die Detektierungseinheit (41, 51, 61) konfiguriert ist, um zu detektieren, ob ein Ausnahmeereignis stattfindet;
die Erzeugungseinheit (42, 52, 63) konfiguriert ist, um, wenn die Detektierungseinheit (41, 51, 61) detektiert, dass ein Ausnahmeereignis stattfindet, ein Steuersignal zum Steuern des Steuerschalters zu erzeugen; und
die Steuereinheit (43, 53, 64) konfiguriert ist, um basierend auf dem durch die Erzeugungseinheit (42, 52, 63) erzeugten Steuersignal den Steuerschalter derart zu steuern, dass die Verbindung zu einem Ausgabekanal der Stromversorgung getrennt wird, **dadurch gekennzeichnet, dass**
das Ausnahmeereignis ein nicht autorisierter externer Signalzugriff ist.

8. Elektronische Vorrichtung nach Anspruch 7, wobei die Stromversorgung eine Mehrfachstromversorgung ist, die eine primäre Stromversorgung und eine Backup-Stromversorgung umfasst, und die elektronische Vorrichtung die primäre Stromversorgung, die einen Chip im Inneren der elektronischen Vorrichtung unabhängig von einem Herunterfahren mit Strom versorgt, und die Backup-Stromversorgung umfasst, die den Chip im Inneren der elektronischen Vorrichtung nicht weiter mit Strom versorgen kann, nachdem die elektronische Vorrichtung herunterfährt, wobei der Steuerschalter ein Steuerschalter zum Steuern der Ausgabe der primären Stromversorgung ist; und die Steuereinheit (43, 53, 64) ferner konfiguriert ist, um basierend auf dem durch die Erzeugungseinheit (42, 52, 63) erzeugten Steuersignal den Steuerschalter derart zu steuern, dass die Verbindung zu einem Ausgabekanal der primären Stromversorgung getrennt wird.

9. Elektronische Vorrichtung nach Anspruch 8, wobei die elektronische Vorrichtung ferner umfasst:
eine Herunterfahreinheit, die konfiguriert ist, um einen Herunterfahrprozess zu starten, nachdem die Steuereinheit den Steuerschalter derart steuert, dass die Verbindung zu dem Ausgabekanal der Stromversorgung getrennt wird.

10. Elektronische Vorrichtung nach einem der Ansprüche 7 bis 9, wobei die elektronische Vorrichtung ferner umfasst:
eine Bestimmungseinheit (62), die konfiguriert ist, um zu bestimmen, wenn die Detektierungseinheit (41, 51, 61) detektiert, dass ein Ausnahmeereignis stattfindet, ob ein Attribut des Ausnahmeereignisses eine vorgegebene Auslösebedingung erfüllt, und wenn ein Bestimmungsergebnis ja ist, die Erzeugungseinheit anzuweisen, ein Steuersignal zum Steuern des Steuerschalters zu erzeugen.

11. Elektronische Vorrichtung nach Anspruch 10, wobei die Bestimmungseinheit ferner konfiguriert ist, um zu bestimmen, wenn die Detektierungseinheit (41, 51, 61) detektiert, dass das Ausnahmeereignis stattfindet, ob die Anzahl der Male, die das Ausnahmeereignis auftritt, größer als ein vorgegebener Schwellenwert der Anzahl der Male des Auftretens ist, und falls ein Bestimmungsergebnis ja ist, die Erzeugungseinheit (42, 52, 63) anzuweisen, ein Steuersignal zum Steuern des Steuerschalters zu erzeugen.

12. Elektronische Vorrichtung nach den Ansprüchen 7 bis 9, wobei die elektronische Vorrichtung ferner umfasst:
eine Alarmierungseinheit (54, 66), die konfiguriert ist, um ein Alarmsignal zu erzeugen, nachdem die Steuereinheit die Verbindung zu dem Ausgabekanal der Stromversorgung trennt.

## Revendications

1. Procédé de protection d'un dispositif électronique, le dispositif électronique comportant un commutateur de commande servant à commander la sortie d'une alimentation électrique, et le procédé comportant les étapes consistant à :
détecter si un événement d'exception se produit, et s'il est détecté qu'un événement d'exception se produit, générer un signal de commande servant à commander le commutateur de commande (S101, S201) ; et
commander, d'après le signal de commande, le commutateur de commande pour déconnecter une voie de sortie de l'alimentation électrique (S102, S202),
**caractérisé en ce que**
l'événement d'exception est un accès de signal externe non autorisé.

2. Procédé selon la revendication 1, l'alimentation électrique étant une alimentation électrique multiple comportant une alimentation électrique principale et une alimentation électrique de secours, et le dispositif électronique comportant l'alimentation électrique principale qui alimente en électricité une puce à l'intérieur du dispositif électronique indépendamment d'un arrêt du dispositif électronique, et l'alimentation électrique de secours qui ne peut pas continuer à alimenter en électricité la puce à l'intérieur du dispositif électronique après que le dispositif électronique s'est arrêté, le commutateur de commande étant un commutateur de commande servant à commander la sortie de l'alimentation électrique principale ; et
l'étape de commande, d'après le signal de commande, du commutateur de commande pour déconnecter la voie de sortie de l'alimentation électrique consistant spécifiquement à :
commander, d'après le signal de commande, le commutateur de commande pour déconnecter une voie de sortie de l'alimentation électrique principale.

3. Procédé selon la revendication 2, le procédé comportant en outre, après l'étape de commande, d'après le signal de commande, du commutateur de commande pour déconnecter la voie de sortie de l'alimentation électrique principale, l'étape consistant à :
entamer un processus d'arrêt.

4. Procédé selon l'une quelconque des revendications 1 à 3, le procédé comportant en outre, après qu'il a été détecté que l'événement d'exception se produit et avant la génération du signal de commande servant à commander le commutateur de commande, les étapes consistant à :
déterminer si un attribut de l'événement d'exception satisfait une condition prédéfinie de déclenchement (S301) ; et si un résultat de détermination est affirmatif, déclencher l'étape consistant à faire générer, par le dispositif électronique, un signal de commande servant à commander le commutateur de commande (S302).

5. Procédé selon la revendication 4, l'étape consistant à déterminer si l'attribut de l'événement d'exception satisfait la condition prédéfinie de déclenchement consistant spécifiquement à :
déterminer si le nombre de reprises de survenue de l'événement d'exception est supérieur à un seuil prédéfini du nombre de reprises de survenue.

6. Procédé selon l'une quelconque des revendications 1 à 3, le procédé comportant en outre, après la commande, d'après le signal de commande, du commutateur de commande pour déconnecter la voie de sortie de l'alimentation électrique, l'étape consistant à :
générer un signal d'alarme (S203, S304).

7. Dispositif électronique, comportant :
une unité (41, 51, 61) de détection, une unité (42, 52, 63) de génération, et une unité (43, 53, 64) de commande, l'unité (43, 53, 64) de commande comportant un commutateur de commande servant à commander la sortie d'une alimentation électrique ;
l'unité (41, 51, 61) de détection étant configurée pour détecter si un événement d'exception se produit ;
l'unité (42, 52, 63) de génération étant configurée pour : lorsque l'unité (41, 51, 61) de détection détecte qu'un événement d'exception se produit, générer un signal de commande servant à commander le commutateur de commande ; et
l'unité (43, 53, 64) de commande étant configurée pour commander, d'après le signal de commande généré par l'unité (42, 52, 63) de génération, le commutateur de commande pour déconnecter une voie de sortie de l'alimentation électrique,
**caractérisé en ce que**
l'événement d'exception est un accès de signal externe non autorisé.

8. Dispositif électronique selon la revendication 7, l'alimentation électrique étant une alimentation électrique multiple comportant une alimentation électrique principale et une alimentation électrique de secours, et le dispositif électronique comportant l'alimentation électrique principale qui alimente en électricité une puce à l'intérieur du dispositif électronique indépendamment d'un arrêt, et l'alimentation électrique de secours qui ne peut pas continuer à alimenter en électricité la puce à l'intérieur du dispositif électronique après que le dispositif électronique s'est arrêté, le commutateur de commande étant un commutateur de commande servant à commander la sortie de l'alimentation électrique principale, et l'unité (43, 53, 64) de commande étant en outre configurée pour commander, d'après le signal de commande généré par l'unité (42, 52, 63) de génération, le commutateur de commande pour déconnecter une voie de sortie de l'alimentation électrique principale.

9. Dispositif électronique selon la revendication 8, le dispositif électronique comportant en outre :
une unité d'arrêt, configurée pour entamer un processus d'arrêt après que l'unité de commande a commandé le commutateur de commande pour déconnecter la voie de sortie de l'alimentation électrique.

10. Dispositif électronique selon l'une quelconque des revendications 7 à 9, le dispositif électronique comportant en outre :
une unité (62) de détermination, configurée pour : lorsque l'unité (41, 51, 61) de détection détecte qu'un événement d'exception se produit, déterminer si un attribut de l'événement d'exception satisfait une condition prédéfinie de déclenchement, et si un résultat de détermination est affirmatif, donner pour consigne à l'unité de génération de générer un signal de commande servant à commander le commutateur de commande.

11. Dispositif électronique selon la revendication 10, l'unité de détermination étant en outre configurée pour :
lorsque l'unité (41, 51, 61) de détection détecte que l'événement d'exception se produit, déterminer si le nombre de reprises de survenue de l'événement d'exception est supérieur à un seuil prédéfini du nombre de reprises de survenue, et si un résultat de détermination est affirmatif, donner pour consigne à l'unité (42, 52, 63) de génération de générer un signal de commande servant à commander le commutateur de commande.

12. Dispositif électronique selon les revendications 7 à 9, le dispositif électronique comportant en outre :
une unité (54, 66) d'alarme, configurée pour générer un signal d'alarme après que l'unité de commande a déconnecté la voie de sortie de l'alimentation électrique.
